Europäisches Patentamt

European Patent Office

Office européen des brevets

(11) Publication number: **0 448 800 A1**

# EUROPEAN PATENT APPLICATION

(21) Application number: 90123894.9

(22) Date of filing: 12.12.90

(51) Int. Cl.5: **G06F 15/21**

(30) Priority: 29.03.90 US 502079

(43) Date of publication of application:
02.10.91 Bulletin 91/40

(84) Designated Contracting States:
DE FR GB

(71) Applicant: **International Business Machines Corporation**
**Old Orchard Road**
**Armonk, N.Y. 10504(US)**

(72) Inventor: **Bollenbacher, George**
**71 Miller Avenue**
**Tarrytown, New York(US)**
Inventor: **Patel, Brian Mand**
**15523 Eagle Tavern Lane**
**Centreville, Virginia(US)**
Inventor: **Widman, Nancy Ruth**
**23 Spruce Road**
**Briarcliff Manor, New York(US)**

(74) Representative: **Herzog, Friedrich Joachim, Dipl.-Ing.**
**IBM Deutschland GmbH Schönaicher Strasse 220**
**W-7030 Böblingen(DE)**

(54) Securities instruments trading system.

(57) A personal computer system or workstation is arranged to display pertinent trading data in separate windows of a display. A trading window is sub-divided into separate windows, for the display of rich securities data, customer data, bond yield data, and cheap securities data. Upon initiation of a trade, buy/sell tickets and transaction confirmation notices are also displayed. Once a rich bond is selected, a list of customers owning the bond is displayed in another window. Also, the bond yield data is calculated over a period of time and plotted in another window. Yield data for the cheap bond is also plotted in the same window as the rich bond yield data. Once a customer decides to make the trade, buy and sell tickets are completed and the trade order sent to the backroom for completion.

EP 0 448 800 A1

This invention relates generally to a system and method for facilitating the trading of securities instruments. In particular, a system and method for displaying information used in making bond trading decisions is disclosed.

In the bond trading industry, a variety of types of information are all factored into a buy/sell decision. Included in the required information are, for example, customer identity, investment objectives, funds available, bond prices, bond performance, bond owners, etc. This information needs to be presented to the trader in such a way that he gets just enough information to make a decision, yet not be burdened by unnecessary information. Furthermore, the information must be presented in a format designed to minimize the time required to make a trade, thereby maximizing revenue.

Traditionally, the gathering of information has been a manual, labor-intensive job, with little organizational structure. The end result is that securities trades are not made in a well-organized manner and many financial opportunities are lost. It is desirable to improve the availability of information to traders so that trades can be made in a timely and efficient manner with the best information available.

## OBJECTS OF THE INVENTION

Therefore, it is an object of this invention to provide a system and method for providing information required by a securities trader in an efficient manner.

It is also an objective to provide a system and method for minimizing the time to complete a securities transaction.

It is a further object to provide a system and method for displaying information to a bond trader in an efficient, user-friendly manner.

## SUMMARY OF THE INVENTION

These, and other objects of the invention which are readily apparent, are realized by the invention disclosed herein. A personal computer system or workstation is arranged to display pertinent trading data in separate windows of a display. A "trading window" is sub-divided into separate windows, for the display of "rich" securities data, customer data, bond yield data, and "cheap" securities data. Upon initiation of a trade, buy/sell tickets and transaction confirmation notices are also displayed.

In the inventive method, securities feed data is first processed to identify "rich" and "cheap" bonds to sell and buy, respectively. This information is then displayed in separate windows on a computer display. Once a "rich" bond is selected, a list of customers owning the bond is displayed in another window. Also, the bond yield data is calculated over a period of time and plotted in another window.

Next, a customer to trade with is selected and a "cheap" bond is chosen based upon customer investment objectives. Yield data for the "cheap" bond is also plotted in the same window as the "rich" bond yield data. Once a customer decides to make the trade, buy and sell tickets are completed and the trade order sent to the "backroom" for completion.

## BRIEF DESCRIPTION OF THE DRAWING

The foregoing and other advantages of the invention will be more fully understood with reference to the description of the preferred embodiment and with reference to the drawing wherein:

FIG. 1 is a flow diagram of the inventive method, and

FIGS. 2A-G are representations of the computer displays that appear on the trading system display during execution of the inventive method.

## DESCRIPTION OF THE PREFERRED EMBODIMENT

While the invention will be particulary described with reference to bond trading, it will be readily apparent to those skilled in the art that the invention has applicability to other types of securities, such as stocks, and to commodity trading. Futhermore, though the computer hardware and software implementation will be described with reference to the preferred embodiment, other types of commercially available hardware and software can be subsituted for the commercial components herein described.

The system was initially implemented on an IBM RT Personal Computer (IBM and RT Personal Computer are trademarks of the IBM Corp.) running the AIX (AIX is a trademark of the IBM Corp.) Operating System. It included 19 inch color display, tape drive for storing data and programs, hard disk drive for storing and accessing data and programs, a keyboard and a mouse. For the graphical user interface, the Motif (Motif is a trademark of the Open Software Foundation) toolkit was used and for a database system, the Ingres Database Management System was selected.

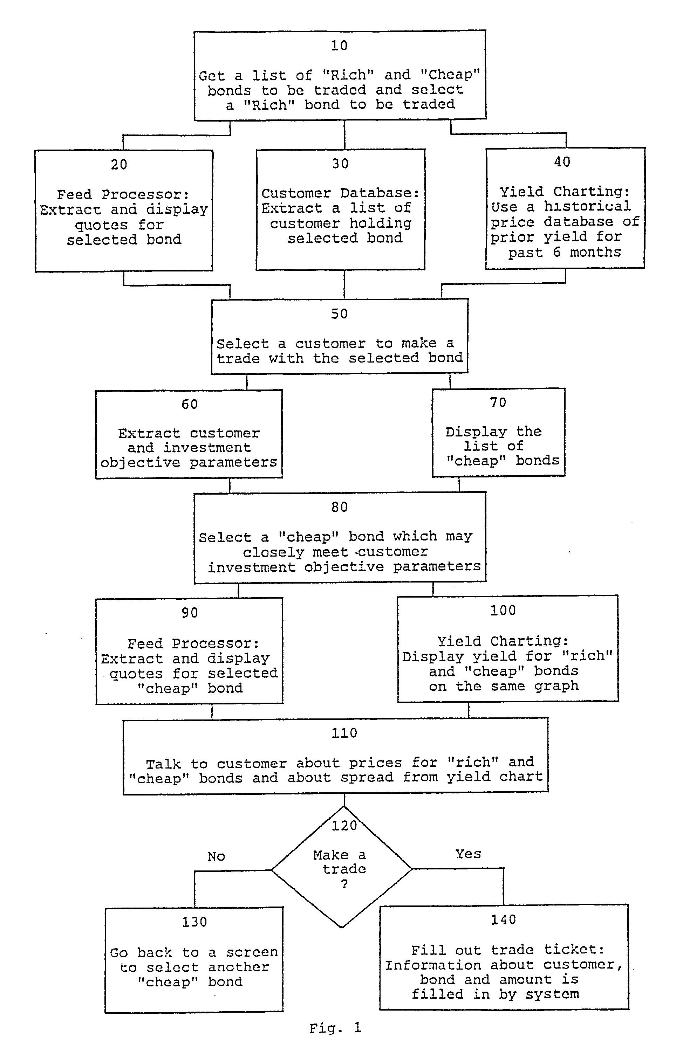

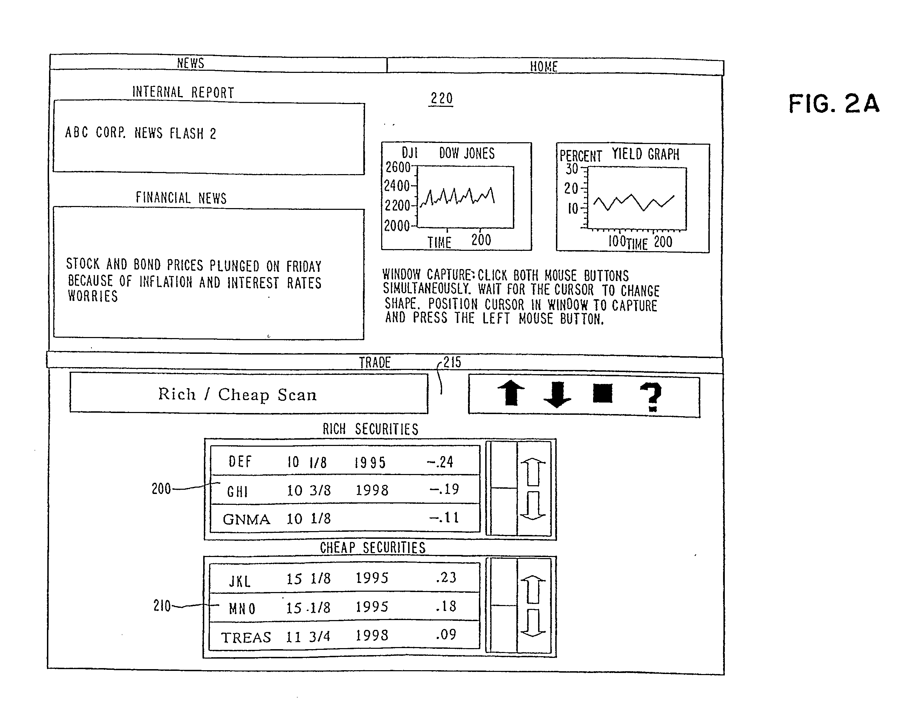

Referring to Fig. 1, the first step in the bond trading process is obtaining a list of "rich" and "cheap" bonds to be traded (Block 10). In the securities industry, "rich" bonds are those that overpriced relative to the market, and "cheap" bonds are relatively underpriced. The actual selection of bonds is done by an analytical program which a particular trader might have written using his own algorithms. Since it is well-known in the art how to make these selections, and each trader has his/her own unique system, and this process is outside the scope of the present invention, step 10 will not be discussed in greater detail. The final result of step 10 is shown in the display illustrated in Fig. 2A. The "rich" bonds are displayed in window 200 and the "cheap" ones in window 210 of "Trade" window 215. The data shown in the "news" window 220 is general financial news that is continuously displayed to keep the trader informed of market activity.

The new data for the bonds is provided by one of several available price collector distribution systems which can be purchased from outside sources or written in-house. An example of the price collector distributor is the FD Consulting MIPS System.

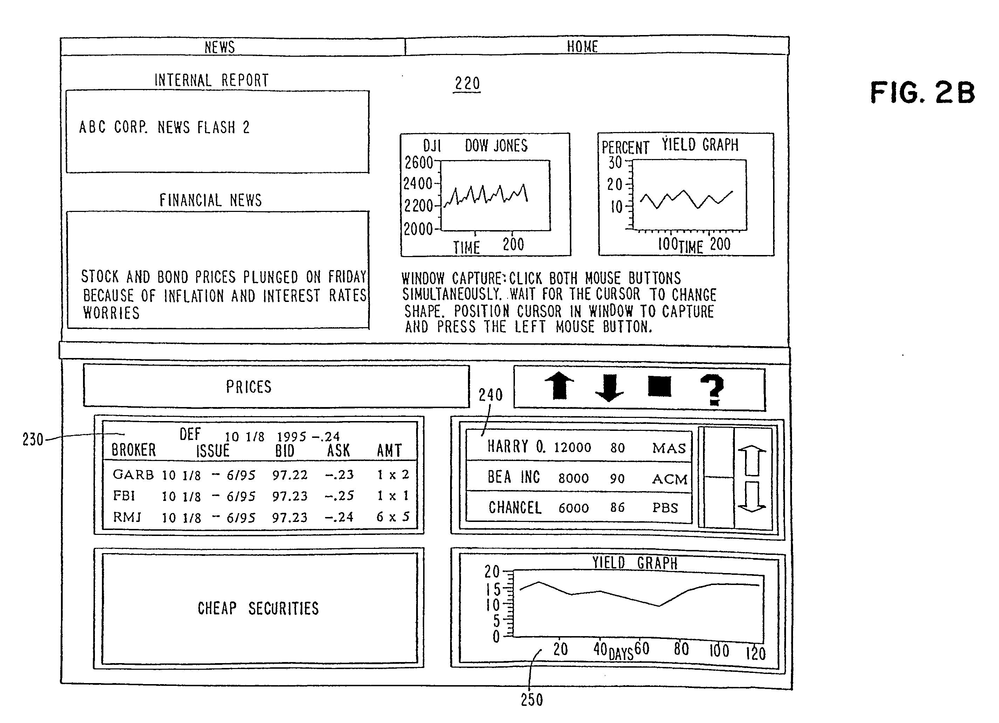

Also in Step 10, the trader selects one of the "rich" bonds to trade. In the example, a bond for company DEF is selected for selling. Three activities are triggered by this selection. Specific data from the feed processor is extracted for this particular bond (Step 20). This data includes brokers' identification, yield rates, pricing information etc. The second process going on is that the system looks at the customer data base and extracts the list of the customers who are holding that particular selected bond (Step 30). At the same time, the system goes to the historical price database and gets the yield data for the past six months (Step 40). The data for these three activities are displayed in windows 230, 240, and 250, respectively (Fig. 2B).

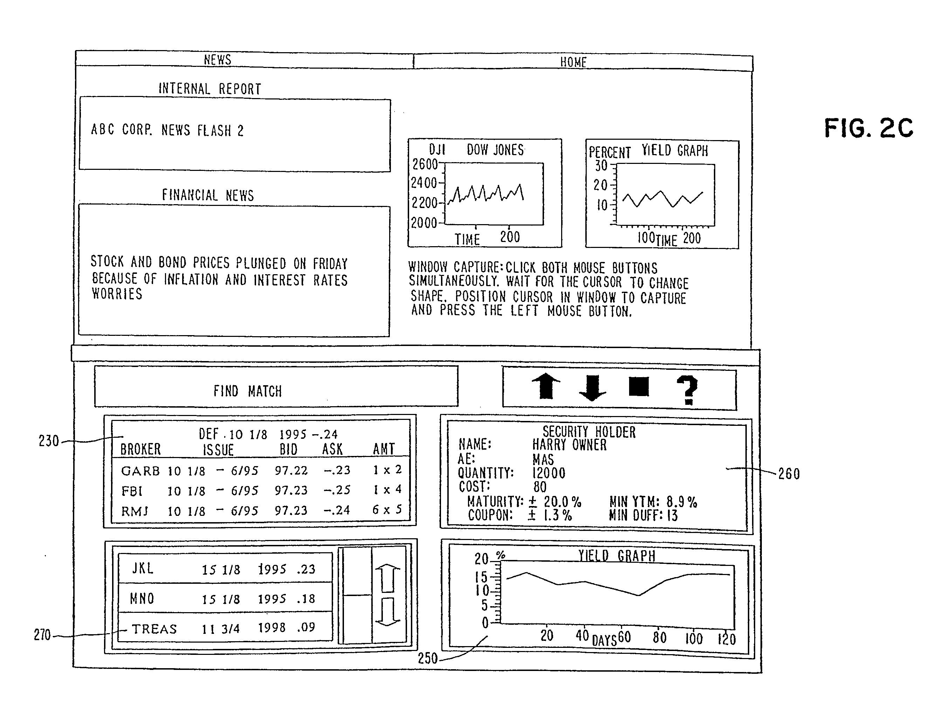

After this information is presented to the trader, the trader selects the customer to make the trade with for that particular selected bond (Step 50). Again, the system looks at the customer database and extracts for the selected customer' Harry Owner is this example, additional detailed information i.e. account executive, investment objectives, financial resources, etc. (Step 60). This information is displayed in window 260 (Fig. 2C).

The system then displays the list of the "cheap" securities in window 270 (Fig. 2C) of the trade window (Step 70). Once this information is presented to the trader, he looks at the investment objective parameters of the customer and looks at the list of the "cheap" bonds, and selects the "cheap" bond which will closely meet the customer's objective parameters (Step 80). He can make this determination based on the information about the customer he has, plus the information presented to him by the system.

Once he selects the "cheap" bond, the system does the processing to select the quotes for prices of the "cheap" bond and extracts information from the price collector distributor interface (Step 90).

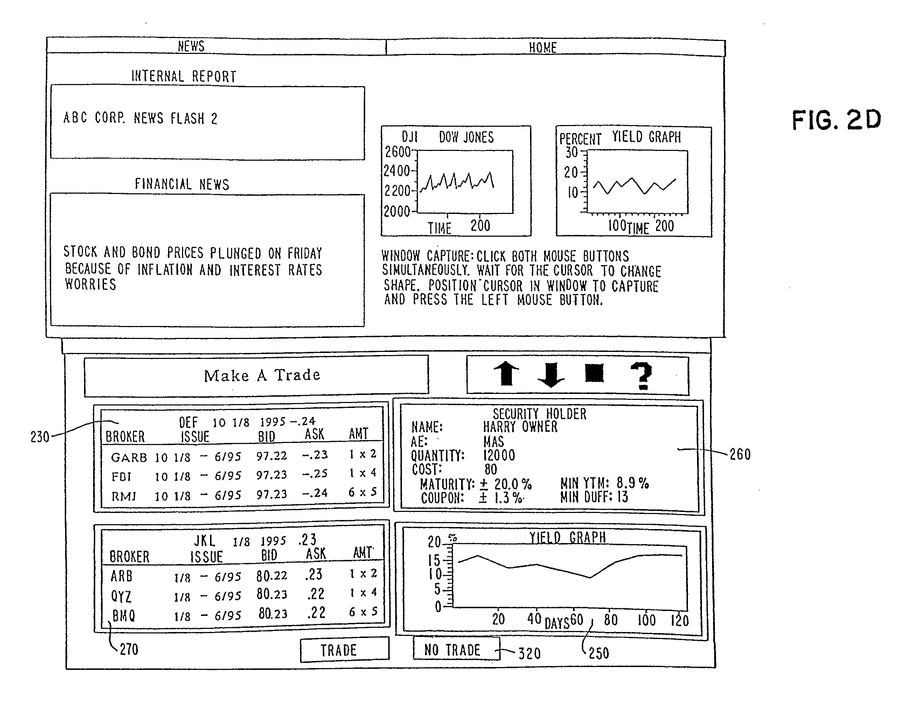

This information is displayed in window 270 (Fig. 2D). A bond for JKL Company was selected. Also, yield for the past six months for the "cheap" security is extracted and displayed (Step 100). That yield is displayed on the same graph (Window 250) as the "rich" bond, along with the "spread" between the two bonds.

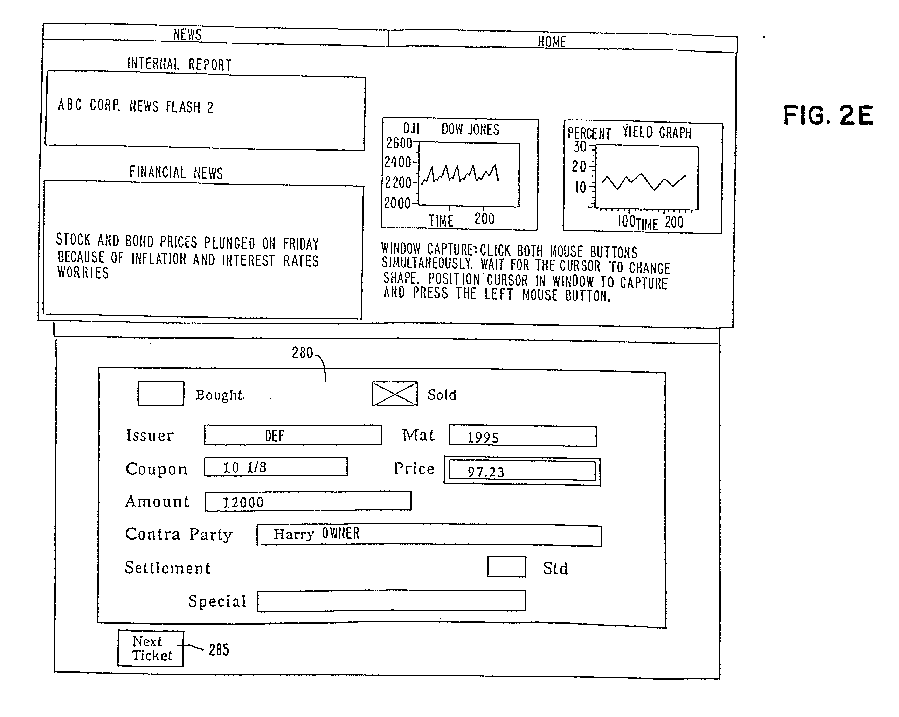

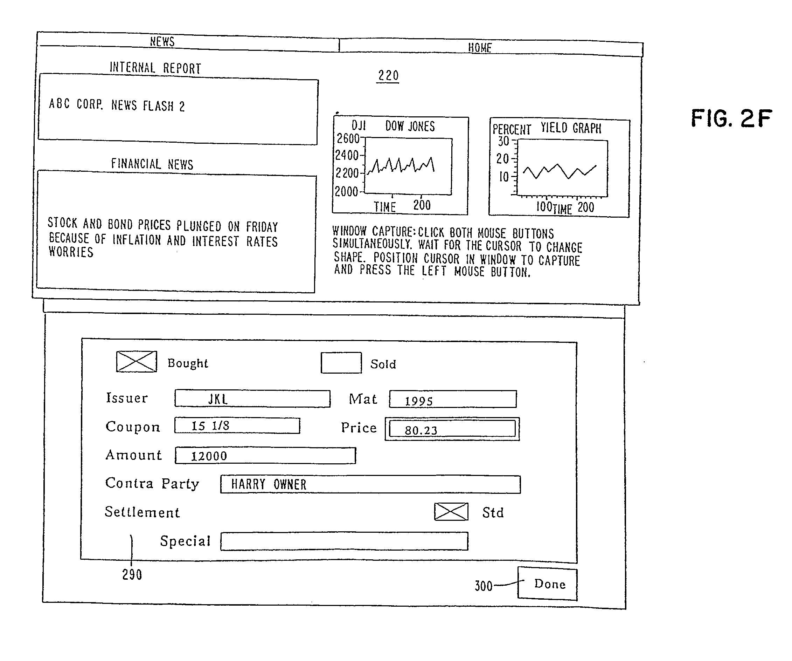

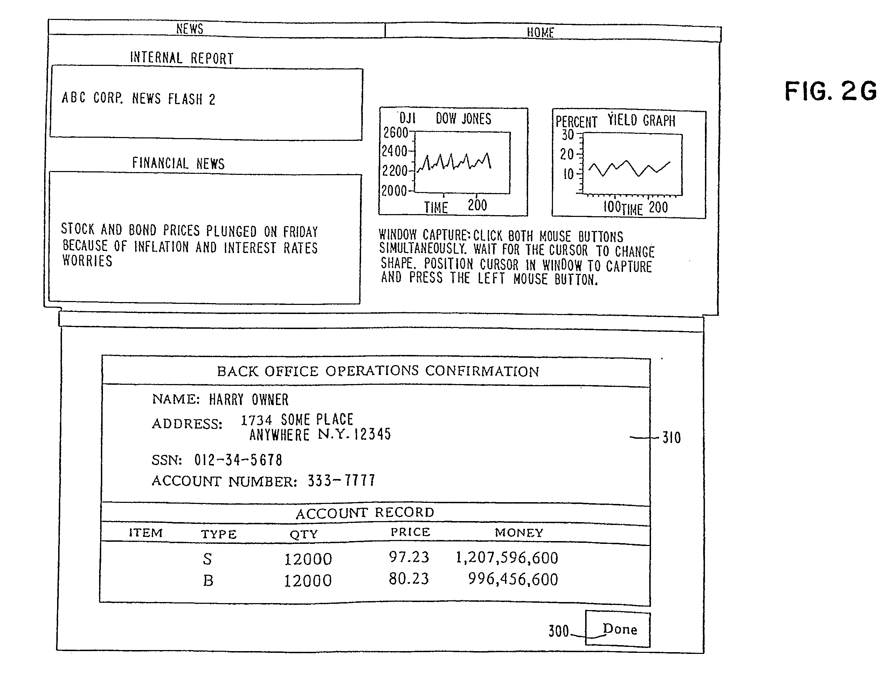

Having this information about the yields and the prices for "rich" and "cheap" bonds and about the customer and his investment objective parameters are, he talks to the customer and tries to make a trade (Block 110). His job is to convince the customer to sell his "rich" bond and buy the "cheap" bond. If the customer's computer system is connected to the company's system, he can send this information on-line. Otherwise, he can talk directly with the customer, and from that conversation the customer makes a decision (Step 120). If he agrees to that arrangement a trade is made. The system presents the trader with a trade ticket (Window 280, Fig. 2E) containing information about the customer, the bond that is to be sold and the amount of the security. This information is filled in by the system automatically The trader fills in the rest of the information in the trade ticket (Block 140). Once the trade ticket is filled out, he selects the "Next Ticket" button 285 and is presented with another trade ticket for the security to be bought (Window 290, Fig. 2F) As for the prior trade ticket, this new trade ticket is filled out by the system and the trader. Once that is done, the trader presses the "done" button (300, Fig. 2F) and the system presents him with a summary (310, Fig. 2G) confirming the transaction. After he is satisfied with the transaction, he pushes the "done" button 300 another time and the trade is completed.

If the trader did not make the trade, because either the customer did not like the "cheap" bond, had problems in prices, or for any other reasons, he presses the "no trade" button 320 on the "Make a Trade" screen (Fig. 2D). He is then presented with a list of "cheap" securities so that he can select another "cheap" bond that may meet the customer's requirements (Step 130). Alternatively, he can go back to the list of customers and select another customer that he feels will be appropriate.

While the invention has been particularly shown and described with reference to a preferred embodiment thereof, it will be understood by those skilled in the art that various changes in detail may be made therein without departing from the spirit, scope and teaching of the invention. Accordingly, the system and process herein desclosed is to be considered merely as illustrative, and the invention is to be limited only as specified in the claims.

**Claims**

**1.** A method for facilitating a securities transaction comprising the following steps:

providing data about securities to be traded, said data including the owner of the securities and the past yield performance of the securities;

providing data about customers;

simultaneously displaying on a computer display data about selected securities, data about selected customers; and

initiating a securities transaction.

**2.** A system for facilitating a securities transaction comprising:

a computer having means for storing data, means for processing data and means for displaying data on a display;

said data including securities data and customer data;

said data processing means including means for extracting data about selected securities and selected customers, and for transferring said extracted data to said displaying means;

said displaying means including means for partitioning a display into windows and means for displaying data about selected securities and selected customers in separate windows;

whereby various types of data pertinent to a securities transaction are simultaneously displayed.

**10**

Get a list of "Rich" and "Cheap" bonds to be traded and select a "Rich" bond to be traded

---

**20**

Feed Processor: Extract and display quotes for selected bond

**30**

Customer Database: Extract a list of customer holding selected bond

**40**

Yield Charting: Use a historical price database of prior yield for past 6 months

---

**50**

Select a customer to make a trade with the selected bond

---

**60**

Extract customer and investment objective parameters

**70**

Display the list of "cheap" bonds

---

**80**

Select a "cheap" bond which may closely meet customer investment objective parameters

---

**90**

Feed Processor: Extract and display quotes for selected "cheap" bond

**100**

Yield Charting: Display yield for "rich" and "cheap" bonds on the same graph

---

**110**

Talk to customer about prices for "rich" and "cheap" bonds and about spread from yield chart

---

**120**

Make a trade ?

No      Yes

---

**130**

Go back to a screen to select another "cheap" bond

**140**

Fill out trade ticket: Information about customer, bond and amount is filled in by system

Fig. 1

5

FIG. 2A

**NEWS** | **HOME**

INTERNAL REPORT

ABC CORP. NEWS FLASH 2

FINANCIAL NEWS

STOCK AND BOND PRICES PLUNGED ON FRIDAY BECAUSE OF INFLATION AND INTEREST RATES WORRIES

220

DJI DOW JONES
2600
2400
2200
2000
TIME 200

PERCENT YIELD GRAPH
30
20
10
100 TIME 200

WINDOW CAPTURE: CLICK BOTH MOUSE BUTTONS SIMULTANEOUSLY. WAIT FOR THE CURSOR TO CHANGE SHAPE. POSITION CURSOR IN WINDOW TO CAPTURE AND PRESS THE LEFT MOUSE BUTTON.

TRADE 215

Rich / Cheap Scan

RICH SECURITIES

| | | | |
|---|---|---|---|
| DEF | 10 1/8 | 1995 | -.24 |
| GHI | 10 3/8 | 1998 | -.19 |
| GNMA | 10 1/8 | | -.11 |

200

CHEAP SECURITIES

| | | | |
|---|---|---|---|
| JKL | 15 1/8 | 1995 | .23 |
| MNO | 15 1/8 | 1995 | .18 |
| TREAS | 11 3/4 | 1998 | .09 |

210

EP 0 448 800 A1

**FIG. 2B**

| NEWS | HOME |

INTERNAL REPORT

<u>220</u>

ABC CORP. NEWS FLASH 2

FINANCIAL NEWS

STOCK AND BOND PRICES PLUNGED ON FRIDAY BECAUSE OF INFLATION AND INTEREST RATES WORRIES

DJI DOW JONES
2600 2400 2200 2000
TIME 200

PERCENT YIELD GRAPH
30 20 10
100 TIME 200

WINDOW CAPTURE: CLICK BOTH MOUSE BUTTONS SIMULTANEOUSLY. WAIT FOR THE CURSOR TO CHANGE SHAPE. POSITION CURSOR IN WINDOW TO CAPTURE AND PRESS THE LEFT MOUSE BUTTON.

PRICES

240

230

| | DEF 10 1/8 1995 −.24 | | | |
| BROKER | ISSUE | BID | ASK | AMT |
| GARB | 10 1/8 − 6/95 | 97.22 | −.23 | 1 x 2 |
| FBI | 10 1/8 − 6/95 | 97.23 | −.25 | 1 x 1 |
| RMJ | 10 1/8 − 6/95 | 97.23 | −.24 | 6 x 5 |

| HARRY O. | 12000 | 80 | MAS |
| BEA INC | 8000 | 90 | ACM |
| CHANCEL | 6000 | 86 | PBS |

CHEAP SECURITIES

YIELD GRAPH
20 15 10 5 0
20 40 DAYS 60 80 100 120

250

FIG. 2C

NEWS | HOME

INTERNAL REPORT

ABC CORP. NEWS FLASH 2

FINANCIAL NEWS

STOCK AND BOND PRICES PLUNGED ON FRIDAY BECAUSE OF INFLATION AND INTEREST RATES WORRIES

DJI DOW JONES
2600
2400
2200
2000
TIME 200

PERCENT YIELD GRAPH
30
20
10
100 TIME 200

WINDOW CAPTURE: CLICK BOTH MOUSE BUTTONS SIMULTANEOUSLY. WAIT FOR THE CURSOR TO CHANGE SHAPE. POSITION CURSOR IN WINDOW TO CAPTURE AND PRESS THE LEFT MOUSE BUTTON.

FIND MATCH

| BROKER | ISSUE | BID | ASK | AMT |
|---|---|---|---|---|
| DEF .10 1/8 1995 −.24 | | | | |
| GARB | 10 1/8 − 6/95 | 97.22 | −.23 | 1 x 2 |
| FBI | 10 1/8 − 6/95 | 97.23 | −.25 | 1 x 4 |
| RMJ | 10 1/8 − 6/95 | 97.23 | −.24 | 6 x 5 |

230

SECURITY HOLDER
NAME:       HARRY OWNER
AE:         MAS
QUANTITY:   12000
COST:       80
  MATURITY: ± 20.0 %    MIN YTM: 8.9 %
  COUPON:   ± 1.3 %     MIN DUFF: 13

260

| JKL | 15 1/8 | 1995 | .23 |
| MNO | 15 1/8 | 1995 | .18 |
| TREAS | 11 3/4 | 1998 | .09 |

270

YIELD GRAPH
20 %
15
10
5
0
20 40 DAYS 60 80 100 120

250

EP 0 448 800 A1

**FIG. 2D**

| NEWS | HOME |
|---|---|

INTERNAL REPORT

ABC CORP. NEWS FLASH 2

FINANCIAL NEWS

STOCK AND BOND PRICES PLUNGED ON FRIDAY BECAUSE OF INFLATION AND INTEREST RATES WORRIES

DJI  DOW JONES
2600
2400
2200
2000
TIME  200

PERCENT  YIELD GRAPH
30
20
10
100 TIME 200

WINDOW CAPTURE: CLICK BOTH MOUSE BUTTONS SIMULTANEOUSLY. WAIT FOR THE CURSOR TO CHANGE SHAPE. POSITION CURSOR IN WINDOW TO CAPTURE AND PRESS THE LEFT MOUSE BUTTON.

Make A Trade       ↑ ↓ ■ ?

230

| | DEF 10 1/8 1995 −.24 | | | |
|---|---|---|---|---|
| BROKER | ISSUE | BID | ASK | AMT |
| GARB | 10 1/8 − 6/95 | 97.22 | −.23 | 1 x 2 |
| FBI | 10 1/8 − 6/95 | 97.23 | −.25 | 1 x 4 |
| RMJ | 10 1/8 − 6/95 | 97.23 | −.24 | 6 x 5 |

SECURITY HOLDER
NAME:       HARRY OWNER
AE:         MAS
QUANTITY:   12000
COST:       80
MATURITY: ± 20.0 %      MIN YTM: 8.9 %
COUPON:   ± 1.3 %       MIN DUFF: 13

260

| | JKL 1/8 1995 .23 | | | |
|---|---|---|---|---|
| BROKER | ISSUE | BID | ASK | AMT |
| ARB | 1/8 − 6/95 | 80.22 | .23 | 1 x 2 |
| QYZ | 1/8 − 6/95 | 80.23 | .22 | 1 x 4 |
| BMQ | 1/8 − 6/95 | 80.23 | .22 | 6 x 5 |

20 %        YIELD GRAPH
15
10
5
0
20  40 DAYS 60   80  100  120

270

TRADE       NO TRADE — 320       250

FIG. 2E

NEWS | HOME

INTERNAL REPORT

ABC CORP. NEWS FLASH 2

FINANCIAL NEWS

STOCK AND BOND PRICES PLUNGED ON FRIDAY BECAUSE OF INFLATION AND INTEREST RATES WORRIES

DJI   DOW JONES
2600
2400
2200
2000
TIME   200

PERCENT   YIELD GRAPH
30
20
10
100 TIME 200

WINDOW CAPTURE: CLICK BOTH MOUSE BUTTONS SIMULTANEOUSLY. WAIT FOR THE CURSOR TO CHANGE SHAPE. POSITION CURSOR IN WINDOW TO CAPTURE AND PRESS THE LEFT MOUSE BUTTON.

280

☐ Bought.          ☒ Sold

Issuer [ DEF ]          Mat [ 1995 ]

Coupon [ 10 1/8 ]       Price [ 97.23 ]

Amount [ 12000 ]

Contra Party [ Harry OWNER ]

Settlement                    ☐ Std

Special [                     ]

[ Next Ticket ] — 285

EP 0 448 800 A1

EP 0 448 800 A1

FIG. 2F

NEWS      HOME

INTERNAL REPORT

220

ABC CORP. NEWS FLASH 2

FINANCIAL NEWS

STOCK AND BOND PRICES PLUNGED ON FRIDAY BECAUSE OF INFLATION AND INTEREST RATES WORRIES

DJI   DOW JONES
2600
2400
2200
2000
TIME  200

PERCENT  YIELD GRAPH
30
20
10
100 TIME 200

WINDOW CAPTURE: CLICK BOTH MOUSE BUTTONS SIMULTANEOUSLY. WAIT FOR THE CURSOR TO CHANGE SHAPE. POSITION CURSOR IN WINDOW TO CAPTURE AND PRESS THE LEFT MOUSE BUTTON.

⊠ Bought      ☐ Sold

Issuer   JKL      Mat   1995

Coupon   15 1/8      Price   80.23

Amount   12000

Contra Party   HARRY OWNER

Settlement   ⊠ Std

Special

290

300 — Done

INTERNAL REPORT

ABC CORP. NEWS FLASH 2

FINANCIAL NEWS

STOCK AND BOND PRICES PLUNGED ON FRIDAY
BECAUSE OF INFLATION AND INTEREST RATES
WORRIES

DJI   DOW JONES

2600
2400
2200
2000

TIME   200

PERCENT   YIELD GRAPH

30
20
10

100 TIME 200

WINDOW CAPTURE: CLICK BOTH MOUSE BUTTONS
SIMULTANEOUSLY. WAIT FOR THE CURSOR TO CHANGE
SHAPE. POSITION CURSOR IN WINDOW TO CAPTURE
AND PRESS THE LEFT MOUSE BUTTON.

## BACK OFFICE OPERATIONS CONFIRMATION

NAME: HARRY OWNER

ADDRESS:   1734 SOME PLACE
           ANYWHERE N.Y. 12345

SSN: 012-34-5678

ACCOUNT NUMBER: 333-7777

— 310

### ACCOUNT RECORD

| ITEM | TYPE | QTY | PRICE | MONEY |
|------|------|-----|-------|-------|
|      | S    | 12000 | 97.23 | 1,207,596,600 |
|      | B    | 12000 | 80.23 | 996,456,600 |

300 ⌐ Done

**FIG. 2G**

EP 0 448 800 A1

# EUROPEAN SEARCH REPORT

**EP 90 12 3894**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 388 162   (CHICAGO BOARD OF TRADE)<br>* abstract; figure 1b *<br>— — — | 1,2 | G 06 F 15/21 |
| X | GB-A-2 161 003   (MERRILL LYNCH AND CO INC (USA DELAWARE))<br>* abstract; figure 2 * * page 3, right-hand column, lines 117 - 124 *<br>— — — | 1,2 | |
| X | US-A-4 823 265   (GEORGE E. NELSON)<br>* column 1, line 58 - column 2, line 25; figure 2 *<br>— — — — — | 1,2 | |

| TECHNICAL FIELDS SEARCHED (Int. Cl.5) |
|---|
| G 06 F |

The present search report has been drawn up for all claims

| Place of search | Date of completion of search | Examiner |
|---|---|---|
| Berlin | 05 July 91 | NICHOLLS J |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document